# EUROPÄISCHE PATENTSCHRIFT

(11) **EP 2 568 681 B1**
(45) Veröffentlichungstag und Bekanntmachung des Hinweises auf die Patenterteilung: **04.12.2019**
(21) Anmeldenummer: 12183114.3
(22) Anmeldetag: 05.09.2012
(51) Int. Cl.: H04L 29/06

(54) **Netzwerkkommunikationsgerät zur Kommunikation über ein Kommunikationsnetzwerk**
Network communication device for communicating over a communication network
Appareil de communication en réseau destiné à la communication via un réseau de communication

(30) Priorität: 07.09.2011 DE 102011082237
(43) Veröffentlichungstag der Anmeldung: 13.03.2013
(73) Patentinhaber: Deutsche Telekom AG, 53113 Bonn (DE)
(72) Erfinder: Königshofen, Thomas, 53225 Bonn (DE); Peusquens, Dr., Rüdiger, 50354 Hürth (DE); Schuster, Andreas, 53177 Bonn (DE)
(74) Vertreter: Vossius & Partner Patentanwälte Rechtsanwälte mbB

(56) Entgegenhaltungen:
- US-A1- 2010 050 260
- US-A1- 2010 115 621
- US-A1- 2010 202 299
- US-A1- 2011 154 492
- REHAK M ET AL: "Adaptive Multiagent System for Network Traffic Monitoring", IEEE INTELLIGENT SYSTEMS, IEEE, US, Bd. 24, Nr. 3, 1. Mai 2009 (2009-05-01), Seiten 16-25, XP011258543, ISSN: 1541-1672
- ZSEBY FRAUNHOFER FOKUS M MOLINA DANTE N DUFFIELD AT(OEB_ENTITY_AMPERSAND)AMP T ET AL: "Sampling and Filtering Techniques for IP Packet Selection; rfc5475.txt", SAMPLING AND FILTERING TECHNIQUES FOR IP PACKET SELECTION; RFC5475.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. März 2009 (2009-03-01), XP015065544, [gefunden am 2009-04-01]

## Beschreibung

### TECHNISCHES GEBIET

Die folgende Erfindung betrifft ein System und Verfahren auf dem Gebiet der Erkennung von Angriffen in einem Kommunikationsnetzwerk, sowie ein Netzwerkkommunikationsgerät hierfür.

### TECHNISCHER HINTERGRUND

Moderne Kommunikationsnetzwerke sind einer Vielzahl von Gefahrenquellen ausgesetzt, deren Ausschaltung für die sichere Kommunikation von entscheidender Bedeutung ist.

Eine der bekannten Gefahrenquellen sind die sogenannten Botnetze, welche durch eine Gruppe von mittels eines Botnetzkommandoservers gesteuerten Software-Robotern gebildet werden. Die Bots laufen üblicherweise auf vernetzten Rechnern und nutzen deren Komm unikationsressourcen.

Problematisch an einem Botnetzangriff ist jedoch, dass dieser durch die bekannten Firewalls nicht sicher erkannt werden kann.

Die Offenlegungsschrift US 2010/202299 A1 zeigt eine Netzwerk-Überwachungsarchitektur umfassend einen Analyseserver und eine Netzwerkkarte umfassend mehrere Sensoren.

Die Offenlegungsschrift US 2010/115621 A1 zeigt ein Detektionssystem zum Detektieren von schädlichem Inhalt in einem Kommunikationsnetzwerk.

Die Offenlegungsschrift US 2010/050260 A1 zeigt eine Vorrichtung zum Bestimmen eines Angriffs in einem Kommunikationsnetzwerk.

Die Offenlegungsschrift US 2011/154492 A1 zeigt ein Filterverfahren für ein Kommunikationsnetzwerk.

Die Druckschrift Rehak M. et al.: "Adaptive Multiagent System for Network Traffic Monitoring" zeigt ein Netzwerkverkehrüberwachungssystem.

Die Druckschrift Zseby Fraunhofer Fokus M. Molina Dante N. Duffield AT (oeb_entity_ampersand) AMP T. et al.: "Sampling and filtering techniques for IP packet selection"; RFC 5475.txt" zeigt ein Filterverfahren für IP-Pakete.

### ZUSAMMENFASSUNG

Es ist daher die Aufgabe der vorliegenden Erfindung, ein System, ein Verfahren und ein Netzwerkkommunikationsgerät zur Erkennung von Angriffen in einem Kommunikationsnetzwerk, insbesondere zur Erkennung von Botnetzangriffen zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Beobachtung eines Verhaltens eines Netzwerkkommunikationsgerätes, beispielsweise eines CPEs (CPE: Consumer Premises Equipment), insbesondere eines Routers oder eines sonstigen Zugangsgerätes, realisiert werden kann. Hierzu kann das Netzwerkkommunikationsgerät das Kommunikationsprofil eines Benutzers statistisch erfassen um auf dieser Basis eine Abweichung von dem erfassten Kommunikationsprofil zu erkennen, welche auf einen Botnetzangriff hinweist. Die Abweichung kann ein unerwarteter Kommunikationsparameter wie beispielsweise eine Sendedatenrate sein, welcher sich von den üblicherweise verwendeten Kommunikationsparametern unterscheidet. Der unerwartete Kommunikationsparameter kann als Meldung an eine Netzwerkentität übermittelt werden, welche beispielsweise ein Element eines Missbrauchserkennungssystems sein kann. Bei einer Häufung von gleichartigen Meldungen, d.h. Meldungen, welche sich auf denselben Kommunikationsparameter beziehen, kann die Netzwerkentität eine Warnmeldung erzeugen, welche beispielsweise einen Botnetzangriff anzeigt. Diese Warnmeldung kann einem Sicherheitscenter zugeleitet werden und dort automatisch oder durch Fachpersonal ausgewertet werden.

Gemäß einem ersten Aspekt, betrifft die Erfindung ein Netzwerkkommunikationsgerät zur Kommunikation über ein Kommunikationsnetzwerk, mit einem Prozessor, welcher ausgebildet ist, einen aktuellen Wert eines Kommunikationsparameters der Kommunikation über das Kommunikationsnetzwerk zu erfassen, und eine Abweichung des aktuellen Wertes des Kommunikationsparameters von einem Mittelwert des Kommunikationsparameters zu ermitteln; und einer Netzwerkschnittstelle, welche ausgebildet ist, den aktuellen Werte des Kommunikationsparameters über das Kommunikationsnetzwerk bei einer Abweichung des aktuellen Wertes des Kommunikationsparameters von dem Mittelwert des Kommunikationsparameters auszusenden.

Der Prozessor ist bevorzugt programmtechnisch eingerichtet, um den aktuellen Wert des Kommunikationsparameters sowie die Abweichung zu bestimmen. Gemäß einer Ausführungsform kann der Prozessor jedoch fest verdrahtet sein und beispielsweise in der Gestalt eines anwendungsspezifischen integrierten Schaltkreises vorliegen.

Die Netzwerkschnittstelle kann eine drahtlose Netzwerkschnittstelle oder eine drahtgebundene Netzwerkschnittstelle sein. Ist die Netzwerkschnittstelle eine drahtlose Netzwerkschnittstelle, so kann diese gemäß einem drahtlosen Kommunikationsstandard, beispielsweise gemäß DLAN, Bluetooth, GSM, UMTS oder LTE kommunizieren. Ist die Netzwerkschnittstelle drahtgebunden, so kann diese gemäß einem drahtgebundenen Kommunikationsstandard, wie DSL, kommunizieren. Die Netzwerkschnittstelle kann ausgebildet sein, den aktuellen Wert des Kommunikationsparameters an eine vorbestimmte Kommunikationsadresse auszusenden, unter der beispielsweise eine Netzwerkentität erreichbar ist.

Der Prozessor kann ausgebildet sein, die Abweichung auf der Basis eines Vergleichs des aktuellen Wertes mit dem Mittelwert zu bestimmen.

Gemäß einer Ausführungsform betrifft die Erfindung das Netzwerkkommunikationsgerät, wobei der Prozessor ausgebildet ist, die Netzwerkschnittstelle zum Aussenden des aktuellen Wertes des Kommunikationsparameters nur dann anzuweisen, wenn die Abweichung oder der aktuelle Wert des Kommunikationsparameters einen vorbestimmten Schwellwert erreicht.

Der aktuelle Wert des Kommunikationsparameters wird bevorzugt nur dann ausgesendet, wenn dieser oder wenn die Abweichung einen vorbestimmten Schwellwert überschreitet oder unterschreitet.

Gemäß einer Ausführungsform, betrifft die Erfindung das Netzwerkkommunikationsgerät, wobei der Prozessor ausgebildet ist, den vorbestimmten Schwellwert in Abhängigkeit von dem Mittelwert des Kommunikationsparameters zu bestimmen. Der vorbestimmte Schnellwert kann beispielsweise um 5%, 10% und 50% oder 100% von dem Mittelwert abweichen.

Gemäß einer Ausführungsform betrifft die Erfindung das Netzwerkkommunikationsgerät, wobei die Netzwerkschnittstelle ausgebildet ist, den Kommunikationsparameter mittels eines der folgenden Kommunikationsprotokolle auszusenden: Internet Protocol, Internet Protocol Flow Information Export Protocol, User Datagram Protocol, Transmission Control Protocol.

Gemäß einer Ausführungsform betrifft die Erfindung das Netzwerkkommunikationsgerät, wobei der Prozessor ausgebildet ist, den aktuellen Wert des Kommunikationsparameters innerhalb eines vorbestimmten Beobachtungszeitintervalls zu erfassen. Das Beobachtungszeitintervall kann beispielsweise 1 Sekunde, 2 Sekunden, 5 Sekunden, 10 Sekunden, 30 Sekunden, 1 Minute, 2 Minuten, 5 Minuten oder 10 Minuten betragen. Das Beobachtungszeitintervall kann auch gleitend sein.

Gemäß einer Ausführungsform betrifft die Erfindung das Netzwerkkommunikationsgerät, wobei der Kommunikationsparameter zumindest einer der folgenden Kommunikationsparameter ist: durch das Kundengerät empfangenes Datenvolumen, durch das Kundengerät ausgesendetes Datenvolumen, Verhältnis von einem durch das Kundengerät empfangenen Datenvolumen zu einem durch das Kundengerät ausgesendetem Datenvolumen, Datendurchsatz, Sendedatenrate, Empfangsdatenrate, Verhältnis von Sendedatenrate zu Empfangsdatenrate, Anzahl der Sendepakete, Anzahl der Empfangspakete, Größe eines Sendepakets, Größe eines Empfangspakets, Anfangszeit und Endzeit eines Informationsflusses, Zieladresse, insbesondere eine IPv4- oder IPv6-Zieladresse, Quelladresse, insbesondere eine IPv4- oder IPv6-Quelladresse, geographische Lage zu einer Zieladresse, geographische Lage zu einer Quelladresse, Quellport für ein Kommunikationsprotokoll, Zielport für ein Kommunikationsprotokoll.

Gemäß einer Ausführungsform betrifft die Erfindung das Netzwerkkommunikationsgerät, wobei der Prozessor ausgebildet ist, den Mittelwert des Kommunikationsparameters durch eine Mittelung über Werte des Kommunikationsparameters, insbesondere durch eine gleitende Mittelung, oder durch die Bestimmung einer mittleren Häufigkeit, insbesondere einer mittleren Häufigkeit eines Wertes eines Kommunikationsparameters, oder die Bestimmung einer mittleren Varianz der Werte des Kommunikationsparameters zu bestimmen.

Gemäß einer Ausführungsform betrifft die Erfindung das Netzwerkkommunikationsgerät, wobei der Mittelwert des Kommunikationsparameters zumindest eines der folgenden Mittelwerte ist: durch das Kundengerät empfangenes mittleres Datenvolumen, durch das Kundengerät ausgesendetes mittleres Datenvolumen, Verhältnis von einem durch das Kundengerät empfangenen mittleres Datenvolumen zu einem durch das Kundengerät ausgesendetem mittlerem Datenvolumen, mittlerer Datendurchsatz, mittlere Sendedatenrate, mittlere Empfangsdatenrate, mittleres Verhältnis von Sendedatenrate zu Empfangsdatenrate, mittlere Anzahl der Sendepakete, mittlere Anzahl der Empfangspakete, mittlere Größe eines Sendepakets, mittlere Größe eines Empfangspakets, mittlere Anfangszeit und Endzeit eines Informationsflusses, Häufigkeit einer Zieladresse, insbesondere einer IPv4- oder IPv6-Zieladresse, Häufigkeit einer Quelladresse, insbesondere einer Ipv4- oder IPv6-Quelladresse, mittlere geographische Lage zu einer Zieladresse, mittlere geographische Lage zu einer Quelladresse, Häufigkeit eines Quellports für ein Kommunikationsprotokoll, Häufigkeit eines Zielports für ein Kommunikationsprotokoll.

Gemäß einer Ausführungsform betrifft die Erfindung das Netzwerkkommunikationsgerät, wobei die Netzwerkschnittstelle ausgebildet ist, eine Filterbeschreibung über das Kommunikationsnetzwerk ansprechend auf das Aussenden des Kommunikationsparameters zu empfangen, und wobei der Prozessor ausgebildet ist, gemäß der Filterbeschreibung eine Kommunikationsverbindung zu einer vorbestimmten Netzwerkadresse zu sperren.

Die Filterbeschreibung kann beispielsweise eine Zieladresse umfassen, welche gesperrt werden soll.

Gemäß einer Ausführungsform betrifft die Erfindung das Netzwerkkommunikationsgerät, wobei der Prozessor ausgebildet ist, eine einem Benutzer des Netzwerkkommunikationsgerätes anzeigbare Mitteilung über die Sperrung der Kommunikationsverbindung zu der vorbestimmten Netzwerkadresse zu erzeugen.

Die anzeigbare Mitteilung kann beispielsweise in der Gestalt einer unter einer vorbestimmten Netzwerkadresse abgelegten Web-Seite vorliegen.

Gemäß einer Ausführungsform betrifft die Erfindung das Netzwerkkommunikationsgerät, wobei der Prozessor ausgebildet ist, einen Domain Name System Resolver zu implementieren, wobei der Domain Name System Resolver eine Filterliste, insbesondere eine konfigurierbare Filterliste, mit zumindest einem Filterkriterium umfasst.

Die Filterliste kann beispielsweise von einer entfernten Netzwerkentität an das Netzwerkkommunikationsgerät übermittelt werden.

Gemäß einer Ausführungsform betrifft die Erfindung das Netzwerkkommunikationsgerät, wobei der Domain Name System Resolver ausgebildet ist, ansprechend auf eine Anfrage, einem Alias-Namen eine dem Alias-Namen zugeordnete Netzwerkadresse auszugeben, statt der dem Alias-Namen zugeordneten Netzwerkadresse eine vorbestimmte Netzwerkadresse auszugeben, wenn der Alias-Name einem Filterkriterium der Filterliste entspricht.

Auf diese Weise wird die Auflösung des Alias-Namens unterbunden, wobei unter der vorbestimmten Netzwerkadresse eine Web-Seite abrufbar sein kann, welche darauf hinweist, dass die Auflösung des Alias-Namens unterbunden wurde.

Gemäß einer Ausführungsform betrifft die Erfindung das Netzwerkkommunikationsgerät, wobei das Filterkriterium eine zumindest teilweise Übereinstimmung eines Alias-Namens mit einer Filterbeschreibung umfasst.

In der Filterbeschreibung können beispielsweise mehrere Alias-Namen aufgeführt sein, deren Auflösung unterbunden werden soll.

Gemäß einer Ausführungsform betrifft die Erfindung das Netzwerkkommunikationsgerät, das ein Netzwerk-Router ist.

Gemäß einer Ausführungsform betrifft die Erfindung das Netzwerkkommunikationsgerät, das programmtechnisch eingerichtet ist.

Hierzu kann das Netzwerkkommunikationsgerät einen Speicher mit einem darin abgelegten Computerprogramm umfassen, auf das der Prozessor zugreifen kann.

Gemäß einem weiteren Aspekt betrifft die Erfindung ein Verfahren zur Kommunikation über ein Kommunikationsnetzwerk, mit: Erfassen eines aktuellen Wertes eines Kommunikationsparameters der Kommunikation über das Kommunikationsnetzwerk, Ermitteln einer Abweichung des aktuellen Wertes des Kommunikationsparameters von einem Mittelwert des Kommunikationsparameters und Aussenden des aktuellen Wertes des Kommunikationsparameters über das Kommunikationsnetzwerk bei einer Abweichung des aktuellen Wertes des Kommunikationsparameters von dem Mittelwert des Kommunikationsparameters.

Weitere Merkmale des Verfahrens ergeben sich unmittelbar aus der Funktionalität des Netzwerkkommunikationsgerätes, insbesondere aus der Funktionalität zumindest eines der Elemente des Netzwerkkommunikationsgerätes.

Gemäß einem weiteren Aspekt betrifft die Erfindung das Netzwerksystem, das eine Netzwerkentität umfasst, welche ausgebildet ist, zumindest einen aktuellen Wert eines Kommunikationsparameters von zumindest einem erfindungsgemäßen Netzwerkkommunikationsgerät zu empfangen, und den aktuellen Wert des Kommunikationsparameters anhand eines messbaren Kriteriums zu bewerten, um festzustellen, ob der aktuelle Wert des Kommunikationsparameters auf ein unerwartetes Kommunikationsverhalten des Netzwerkkommunikationsgerätes hinweist, wobei der Prozessor ferner ausgebildet ist, eine Warnmitteilung auszugeben, falls ein unerwartetes Kommunikationsverhalten des Netzwerkkommunikationsgerätes vorliegt.

Gemäß einer Ausführungsform betrifft die Erfindung das Netzwerksystem, wobei das messbare Kriterium zumindest eine der folgenden Angaben umfasst: Angabe über eine zeitliche Verteilung eines Auftretens des Wertes des Kommunikationsparameters, eine Angabe über eine Wahrscheinlichkeit eines Auftretens des Wertes des Kommunikationsparameters, eine Angabe über die Häufung der Werte des Kommunikationsparameters innerhalb eines Zeitintervalls.

Gemäß einer Ausführungsform betrifft die Erfindung das Netzwerksystem, wobei die Netzwerkentität ferner ausgebildet ist, eine Warnmitteilung über das Kommunikationsnetzwerk an ein Sicherheitscenter auszusenden.

Gemäß einer Ausführungsform betrifft die Erfindung das Netzwerksystem, das ferner einen Aggregationsserver umfasst, welcher ausgebildet ist, eine Mehrzahl von gleichartigen Werten des Kommunikationsparameters zu aggregieren, und die Mehrzahl der aggregierten Kommunikationsparameter an die Netzwerkentität auszusenden.

Gemäß einer Ausführungsform betrifft die Erfindung das Netzwerksystem, das ferner das erfindungsgemäße Netzwerkkommunikationsgerät und ein Sicherheitscenter umfasst, wobei das Sicherheitscenter ausgebildet ist, die Warnmitteilung von der Netzwerkentität zu empfangen und ansprechend auf den Empfang der Warnmitteilung eine Filterbeschreibung zu dem Netzwerkkommunikationsgerät auszusenden, und wobei das Netzwerkkommunikationsgerät ausgebildet ist, gemäß der Filterbeschreibung eine Kommunikationsverbindung zu sperren.

Gemäß einem weiteren Aspekt betrifft die Erfindung ein Computerprogramm zum Ausführen von zumindest einem der erfindungsgemäßen Verfahren auf einem Computer.

Die Erfindung kann in Software und/oder in Hardware realisiert werden.

### BESCHEIBUNG DER FIGUREN

Weitere Ausführungsbeispiele werden bezugnehmend auf die beiliegenden Zeichnungen näher erläutert. Es zeigen:
- Fig. 1: ein Netzwerksystem gemäß einer Ausführungsform;
- Fig. 2: ein Netzwerksystem gemäß einer Ausführungsform;
- Fig. 3: ein Blockdiagramm eines Netzwerkkommunikationsgerätes gemäß einer Ausführungsform;
- Fig. 4: ein Blockdiagramm eines Netzwerkkommunikationsgerätes gemäß einer Ausführungsform; und
- Fig. 5: ein Ablaufdiagramm eines Verfahrens zur Kommunikation über ein Kommunikationsnetzwerk gemäß einer Ausführungsform.

### DETAILLIERTE BESCHREIBUNG

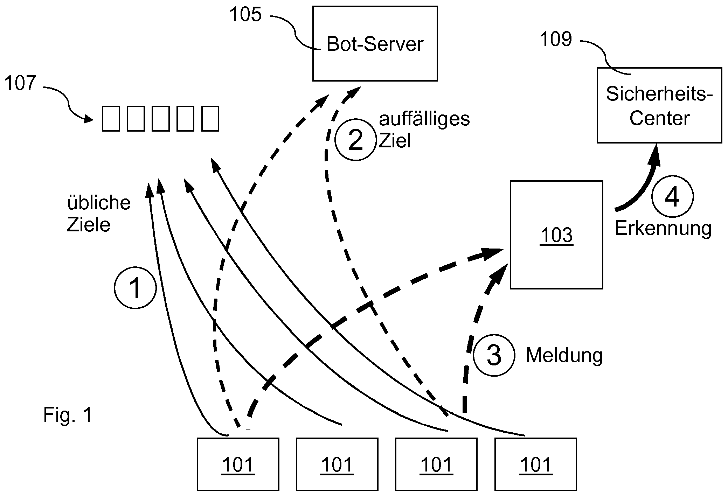

Fig. 1 zeigt ein Netzwerksystem mit einer Mehrzahl von Netzwerkkommunikationsgeräten 101 sowie einer Netzwerkentität 103. Das in Figur 1 dargestellte Netzwerkszenario verdeutlicht einen Botnetzangriff unter Verwendung eines beispielhaft in Figur 1 dargestellten Botnetzkommandoservers 105.

Die Netzwerkkommunikationsgeräte 101 können Netzwerkrouter sein. Die Netzwerkkommunikationsgeräte 101 senden gemäß einem üblichen Kommunikationsschema beispielsweise Daten an übliche Ziele 107, um beispielsweise Webinhalte eines Onlinemagazins abzurufen.

Im Falle eines Botnetzangriffs verhalten sich die Netzwerkkommunikationsgeräte 101 jedoch in Abweichung von dem üblichen Kommunikationsschema anomal und senden beispielsweise Daten an den in Fig. 1 beispielhaft dargestellten Botnetzkommandoserver 105. Diese Abweichung kann in der Gestalt eines von den üblicherweise verwendeten Kommunikationsparametern abweichenden aktuellen Kommunikationsparameters erkannt werden. Der abweichende aktuelle Kommunikationsparameter kann beispielsweise eine abweichende Zieladresse oder ein erhöhtes Sendedatenvolumen sein.

Die Netzwerkkommunikationsgeräte 101 können diese Abweichung des aktuellen Wertes des Kommunikationsparameters von einem Mittelwert des Kommunikationsparameter ermitteln und diese beispielsweise anonym an die Netzwerkentität 103 aussenden, welche eine Warnmeldung an beispielsweise ein Sicherheitscenter 109 übermittelt.

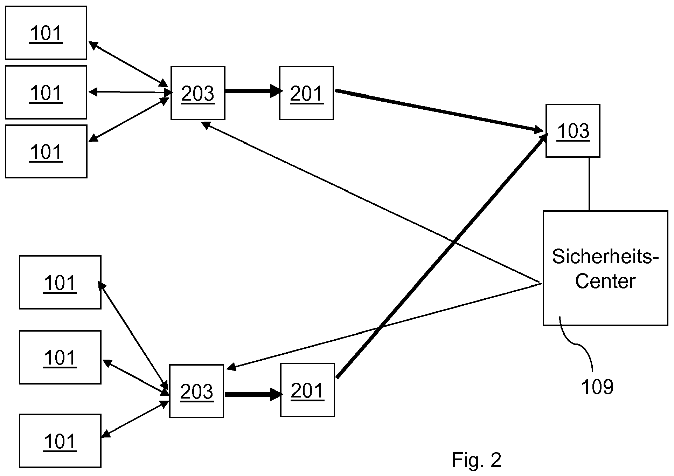

Fig. 2 zeigt ein Netzwerksystem gemäß einer Ausführungsform mit den Netzwerkkommunikationsgeräten 101 sowie der Netzwerkentität 103. Zwischen den Netzwerkkommunikationsgeräten 101 und der Netzwerkentität 103 befindet sich ein Aggregationsserver 201, welcher ausgebildet ist, eine Mehrzahl von gleichartigen Schwellwerten eines Kommunikationsparameters zu aggregieren und diese an die Netzwerkentität 103 auszusenden. Die Netzwerkentität 103 bildet gemäß einer Ausführungsform einen Korrelationsserver.

Optional kann das Fig. 2 dargestellte Netzwerksystem einen Autokonfigurationsserver 203 (ACS) umfassen. Der ACS 203 kann eine Komponente innerhalb eines von einem Internetserviceprovider betriebenen Breitbandnetzes sein und über das Protokoll TR-069 kommunizieren. Hierzu kann der ACS 203 von den Netzwerkkommunikationsgeräten 101 beispielsweise Statusmeldungen entgegennehmen, welche die Werte des jeweiligen aktuellen Kommunikationsparameters umfassen, sowie optional eine Firmware aktualisieren und Konfigurationsdaten an die Netzwerkkommunikationsgeräte 101 verteilen. Der ACS 203 dient gemäß einer Ausführungsform als eine Schnittstelle zwischen den Netzwerkkommunikationsgeräten 101 und dem Aggregationsserver 201.

Der ACS 203 kann gemäß einer Ausführungsform einen Flow Collector im Sinne des RFC 5101 realisieren. Die Übermittlung der Flows kann periodisch beispielsweise alle 60 Minuten erfolgen, wobei ein abweichendes Intervall beispielsweise durch einen Diensteanbieter konfigurierbar ist. Darüber hinaus können die Flows in den folgenden Fällen übertragen werden:
- wenn der in einem Netzwerkkommunikationsgerät 101 für die Zwischenspeicherung von Flows zur Verfügung stehende Arbeitsspeicher zu mehr als 90% ausgelastet ist
- wenn der Diensteanbieter über den ACS 203 eine Übermittlung initiiert
- in den gemäß dem Protokoll TR-069 vorgesehenen Fällen

Die Übermittlung der Daten an den ACS 203 erfolgt gemäß einer Ausführungsform gemäß RFC 5101 und 5102, wobei TR-069 als Transportprotokoll dient.

Der ACS 203 entfernt gemäß einer Ausführungsform sämtliche Informationen über die Herkunft des Flow Records und leitet diesen an einen Aggregationsserver 201 weiter. Üblicherweise bedient ein Aggregationsserver 201 eine große Anzahl netztopologisch benachbarter Netzwerkkommunikationsgeräte 101, z.B. alle Netzwerkkommunikationsgeräte eines Breitband-PoP.

Die Netzwerkkommunikationsgeräte 101 können die Werte des aktuellen Kommunikationsparameters beispielsweise unter Verwendung von Flows gemäß den Normen RFC5101, 5102 und 5470 aussenden. Der ACS 203 kann gemäß einer Ausführungsform die Autorisation des jeweiligen Netzwerkkommunikationsgerätes 101 zur Einlieferung derartiger Flows überprüfen. Gemäß einer Ausführungsform kann der ACS 203 Hinweise auf das den jeweiligen Flow einliefernde Netzwerkkommunikationsgerät 101, wie beispielsweise eine Zugangskennung, entfernen.

Der Aggregationsserver 201 nimmt gemäß einer Ausführungsform Flows von dem ACS 203 entgegen, verdichtet diese und überträgt die resultierenden Daten an den Korrelationsserver 103, welcher diese in einer Datenbank speichern kann. Der Korrelationsserver 103 kann Daten von einer Mehrzahl von Aggregationsservern 201 empfangen, wie es in Figur 2 angedeutet ist. Gemäß einer Ausführungsform ist der Aggregationssserver 201 dem ACS 203 zugeordnet. Der Aggregationsserver 201 bedient gemäß einer Ausführungsform einen Breitband-PoP und damit eine Anzahl netztopologisch benachbarter Netzwerkkommunikationsgeräte 101.

Der Aggregationsserver 201 puffert gemäß einer Ausführungsform die vorstehend genannten Flows für eine vorbestimmte Zeitspanne, welche beispielsweise 5 Minuten betragen und konfigurierbar sein kann. Während dieser Zeitspanne mehrfach eingehende identische bzw. ähnliche Werte eines Kommunikationsparameters, welche sich beispielsweise in einem Quell- bzw. in einem Zielport unterscheiden, werden zusammengefasst, wobei den zusammengefassten Meldungen gemäß einer Ausführungsform ein Hinweis auf die Anzahl der Einzelmeldungen, mit denen die Werte des Kommunikationsparameters übermittelt werden, hinzugefügt wird.

Der Aggregationsserver 201 überträgt gemäß einer Ausführungsform die zusammengefassten Flows fortdauernd an den Korrelationsserver 103.

Die Daten können auf Fluktuationen in der Häufigkeit der Ausprägung eines der in den Flows erfassten Merkmale untersucht werden. Weiterhin werden für den jeweils aktuellen Datenbestand Korrelationen zwischen den Merkmalen berechnet.

Der Korrelationsserver 103 berechnet gemäß einer Ausführungsform fortlaufend beispielsweise Trends für die Korrelation zwischen den gemeldeten Werten eines oder mehrerer Kommunikationsparameter. Hierbei können beispielsweise eine Vorzeichenumkehr, welche beispielsweise bei einer Umkehrung eines Verhältnisses von Sendedatenvolumen zu Empfangsdatenvolumen eintreten kann, ein starker Anstieg oder ein Abfall einer Korrelation erfasst werden. Die Ergebnisse können gemäß einer Ausführungsform visualisiert und/oder an den Sicherheitscenter 109 übermittelt werden. Gemäß einer Ausführungsform können die Daten aus der Datenbank der Korrelationsservers 103 nach Ablauf einer beispielweise konfigurierbaren Zeitspanne gelöscht werden.

Das Sicherheitscenter 109 ist gemäß einer Ausführungsform vorgesehen, die Steuerung der Verteilung der für eine Anomalieerkennung verwendbaren Firmware, welche beispielsweise Filterbeschreibungen umfassen kann, und ihrer Aktualisierung durchzuführen.

Die Steuerung der Aggregation der Flows von den Netzwerkkommunikationsgeräten 101, einschließlich der Parametrisierung konfigurierbarer Hard- und Software Komponenten der Netzwerkkommunikationsgeräte 101 kann gemäß einer Ausführungsform ebenfalls durch das Sicherheitscenter 109 durchgeführt werden. Hierbei können beispielsweise Filterregeln implementiert werden. Gemäß einer weiteren Ausführungsform kann das Sicherheitscenter 109 die Steuerung der Aggregierung durchführen, die Steuerung der Anomalieerkennung in einem Bereich des Internetserviceproviders, einschließlich einer fortlaufenden Anpassung der Verfahren zur Erkennung einer Anomalie, d.h. einer anomalen Abweichung eines Wertes eines Kommunikationsparameters von einem Mittelwert des Kommunikationsparameters, an sich wandelnde Kommunikationsmodelle der Botnetze durchführen, eine Verifikation von Warnmeldungen bzw. Alarmen durchführen, eine Umsetzung der Alarme in Filterlisten durchführen, eine Qualitätssicherung der Filterlisten vornehmen, eine Steuerung einer Verteilung der Filterlisten an die Netzwerkkommunikationsgeräte 101 übernehmen.

Die Flows können nach einer von einem Diensteanbieter konfigurierbaren Zeit aus dem Datenbestand des Korrelationsservers gelöscht werden. Ändern sich Häufigkeiten oder Korrelationen über jeweils konfigurierbare Schwellwerte hinaus, so wird ein Alarm erzeugt.

Alarme können entweder automatisch oder durch sachkundige Mitarbeiter in einem Security Operating Center (SOC) untersucht werden. Hierzu können die im Datenbestand befindlichen Flows durchsucht werden. Eine beispielhafte Suche ist: liste IP-Adresse und Port aller Flows mit dem IP-Protokoll TCP, einem Port > 50000, einer Dauer >= 3σ und einer Datendurchsatzrate <= 3σ.

Bestätigt die Überprüfung des Alarms durch einen Benutzer oder Mitarbeiter des Sicherheitscenters 109 den Verdacht auf eine maliziöse Aktivität, so werden durch einen Benutzer oder Mitarbeiter des Sicherheitscenters 109 zur Abwehr ein oder mehrere Filterregeln erzeugt. Die Filterregeln werden gemäß einer Ausführungsform an den ACS 203 übertragen, und von dort über TR-069 an das CPE übermittelt. Die Übertragung erfolgt gewöhnlich im Anschluss an die Übermittlung der Flows durch das Netzwerkkommunikationsgerät 101 oder in den in TR-069 genannten Fällen. Darüber hinaus kann der Diensteanbieter eine Übertragung initiieren, wie es in der Norm TR-069 vorgesehen ist.

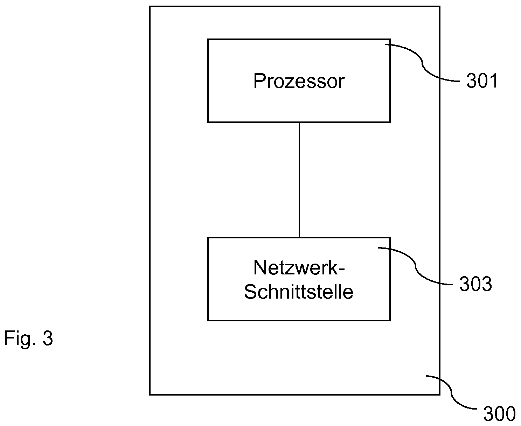

Fig. 3 zeigt ein Blockdiagramm eines Netzwerkkommunikationsgerätes 300 gemäß einer Ausführungsform. Das Netzwerkkommunikationsgerät 300 umfasst einen Prozessor 301, welcher ausgebildet ist, einen aktuellen Wert eines Kommunikationsparameters der Kommunikation des Netzwerkkommunikationsgerätes über ein Kommunikationsnetzwerk zu erfassen, und eine Abweichung des aktuellen Wertes des Kommunikationsparameters der vorgenannten Art von einem Mittelwert des Kommunikationsparameters zu bestimmen. Das Netzwerkkommunikationsgerät umfasst ferner eine Netzwerkschnittstelle 303, welche ausgebildet ist, den aktuellen Wert des Kommunikationsparameters über das Kommunikationsnetzwerk beispielsweise an eine vorbestimmte Kommunikationsadresse bei eine Abweichung des aktuellen Wertes des Kommunikationsparameters von dem Mittelwert des Kommunikationsparameters auszusenden.

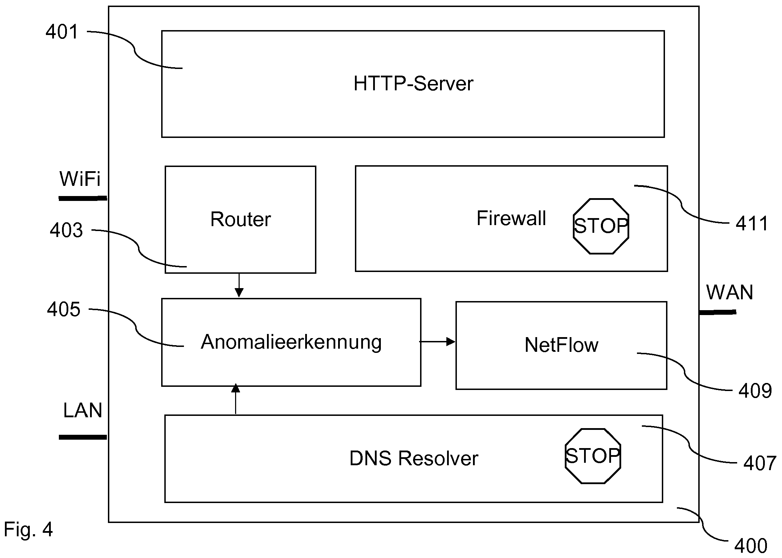

Fig. 4 zeigt ein Blockdiagramm eines Netzwerkkommunikationsgerätes 400 gemäß einer Ausführungsform mit einem HTTP-Server 401 für Konfiguration und Sperrinformation, welche in der Gestalt eines Filters oder einer Filterbeschreibung vorliegen kann, mit einem Router 403 für Routing-Aufgaben, welcher mit einer Anomalieerkennungseinrichtung 405 verbunden ist. Ferner ist ein DNS-Resolver 407 vorgesehen, welcher ebenfalls mit der Anomalieerkennungseinrichtung 405 kommuniziert.

Die Anomalieerkennungseinrichtung 405 kann beispielsweise ausgebildet sein, eine Abweichung eines aktuellen Wertes eines Kommunikationsparameters von einem Mittelwert des Kommunikationsparameters zu erkennen und die Netzwerkschnittstelle 409 zum Aussenden eines aktuellen Wertes des Kommunikationsparameters über ein Kommunikationsnetzwerk anzuweisen. Optional ist eine Firewall 411 vorgesehen.

Die Netzwerkschnittstelle 409 kann ausgebildet sein, über ein WAN-Netzwerk (WAN: Wide Area Network) zu kommunizieren. Benutzer- bzw. Intranetseitig kann das Netzwerkkommunikationsgerät beispielsweise eine drahtlose Schnittstelle (WiFi) bzw. eine drahtgebundene Schnittstelle (LAN: Local Area Network) aufweisen.

Die Einrichtungen 401, 403, 405, 407 und 411 können mittels eines Prozessors, beispielsweise mittels des in Figur 3 dargestellten Prozessors 301, realisiert werden, auf dem eine Firmware abläuft, welche die Einrichtungen 401, 403, 405, 407 und 411 implementiert.

Das Netzwerkkommunikationsgerät 400 ist bevorzugt im Einflussbereich eines Kunden angeordnet und formt gemäß einer Ausführungsform ein CPE mit zwei Netzwerkschnittstellen: einer Kundennetzschnittstelle für die WiFi- oder LAN-Kommunikation und der Schnittstelle 409 WAN zum Internet hin für die WAN-Kommunikation. Die Weiterleitung von Datenpaketen zwischen diesen Schnittstellen und gegebenenfalls der Veränderung der Pakete im Zuge der Weiterleitung kann mittels Hardware realisiert werden, welche durch eine Software, beispielsweise durch die vorgenannte Firmware, gesteuert wird.

Das Netzwerkkommunikationsgerät 400 ist bevorzugt vorgesehen, die Weiterleitung von Daten zwischen dem ISP und dem lokalen Netz oder den lokalen Netzen des Kunden zu realisieren.

Die Firmware kann die Firewall 411 realisieren, welche basierend auf der entfernten IPv4/IPv6-Adresse, dem IP-Protokoll und im Fall der IP-Protokolle UDP und TCP auch des Ports die Kommunikation nach vom ISP konfigurierbaren Regeln verhindert oder erlaubt. Sofern die Kommunikation verhindert wird, sendet die Firewall 411 eine ICMP Nachricht gemäß RFC 792 mit dem Code 10 gemäß RFC 1122 an das die Kommunikation initiierende Netzwerkgerät im Netz des Kunden.

Die Firmware kann ferner den HTTP-Server 401 realisieren, welcher über das Hypertext Transfer Protocol (HTTP, siehe RFC 2068) dem Anwender Statusinformationen darstellt und Konfigurationsänderungen entgegennimmt.

Die Firmware kann ferner den DNS Resolver 407 realisieren, welcher zu unvollständigen und vollständig qualifizierten Domänennamen die zugehörige IP-Adresse ermittelt. Die Ergebnisse können in einem Arbeitsspeicher des Netzwerkommunikationsgerätes 400 gespeichert werden. Der DNS Resolver 407 verwirft einen Eintrag, wenn er Speicherplatz für einen neuen Datensatz gewinnen muss. Der DNS Resolver 407 führt hierzu eine nach der Zeitdauer seit dem letzten Abrufen geordnete Liste (Most Recently Used list, MRU). Der DNS Resolver 407 verwirft einen Eintrag auch, wenn die vom antwortenden Nameserver festgesetzte Lebensdauer (Time To Live, TTL) erreicht wird, ohne dass der Datensatz erneut abgerufen wurde. Das Intervall, in dem der DNS Resolver 407 einen Datensatz während dessen Lebensdauer überprüft, ist gemäß einer Ausführungsform konfigurierbar, insbesondere durch einen Diensteanbieter konfigurierbar.

Gemäß einer Ausführungsform umfasst der DNS Resolver 407 eine konfigurierbare Filterliste. Entspricht der angefragte vollständig qualifizierte Alias-Name einem Filterkriterium, so bricht der DNS Resolver 407 die Namensauflösung ab und antwortet mit einer festen, beispielsweise installationsabhängigen IP-Adresse im Netzwerk des Kunden. Unter dieser IP-Adresse und dem Standardport für HTTP (80/tcp) kann ein Webserver des Netzwerkkommunikationsgerätes 400 über das Hypertext Transfer Protocol eine Webseite ausgeben, die über die Tatsache und den Grund der Sperrung informiert. Jede anderweitige an diese Adresse gerichtete Kommunikation kann mit ICMP Code 10 ("host administratively prohibited"), siehe RFC 792 und 1122, beantwortet werden.

Gemäß einer Ausführungsform erweitert die Firmware das Netzwerkommunikationsgerät 400 um die Fähigkeit zur Erstellung und Übermittlung von Flows gemäß RFC 5101, 5102 und 5470. Die Firmware kann beispielsweise nur in einem Betrachtungsintervall als neu oder verändert erkannte Werte eines Kommunikationsparameters melden.

Zur Anomalieerkennung auf einer Transportschicht kann das Netzwerkkommunikationsgerät 300, 400 einen Observation Point im Sinne des RFC 5101 als ISP-seitige Schnittstelle ist für den OSI Transport Layer verwenden. Gemäß einer Ausführungsform können Werte der folgenden Kommunikationsparameter gemessen und zu Flows zusammengefaßt werden:
- IPv4/IPv6 Quelladresse
- IPv4/IPv6 Zieladresse
- Quellport für die IP-Protokolle UDP und TCP
- Zielport für die IP-Protokolle UDP und TCP
- IP-Protokoll
- Datenvolumen, nach Richtung getrennt
- Paketanzahl, nach Richtung getrennt
- Start und Endzeit des Flows, gemessen beispielsweise in Millisekunden seit einer letzten Initialisierung des Netzwerkkommunikationsgerätes 300, 400.

Datenkommunikation innerhalb des kundenseitigen Netzwerkes wird gemäß einer Ausführungsform nicht berücksichtigt. Der ISP kann jedoch gemäß einer Ausführungsform weitere Ausnahmen konfigurieren, um zum Beispiel die Kommunikation mit den vom ISP betriebenen Posteingangsservern sicherzustellen.

Das Netzwerkkommunikationsgerät 300, 400, insbesondere dessen Prozessor 301, berechnet gemäß einer Ausführungsform je IP-Protokoll (TCP und UDP) und Zielport gleitende Mittelwerte und Varianz folgender Kommunikationsparameter:
- Verhältnis von ein- und ausgehendem Datenvolumen
- Größe ein- und ausgehender Datenpakete
- Dauer des Flows
- Datendurchsatz

Der ISP kann gemäß einer Ausführungsform eine tolerierte Abweichung konfigurieren. Liegt der aktuell verarbeitete Flow außerhalb des tolerierten Intervalls, dann bereitet das Netzwerkkommunikationsgerät 300, 400 den Datensatz für den Export auf. Hierbei kann die kundenseitige IP-Adresse des Flows verworfen werden. Die verbleibende IP-Adresse wird als "entfernte Adresse" (Remote Address) bezeichnet.

Der ISP kann ferner weitere Regeln konfigurieren, die zum Export oder der Unterdrückung eines Flows in der zuvor beschrieben Weise führen.
Zur Anomalieerkennung im Domain Name Service kann der DNS-Resolver 407 einen Observation Point im Sinne des RFC 5101 verwenden. Gemäß einer Ausführungsform können Werte folgender Kommunikationsparameter gemessen werden:
- vollständig qualifizierter Hostname
- IPv4/IPv6 Adresse
- Gültigkeitsdauer der Zuordnung (Time To Live, TTL)
- IPv4/IPv6-Adresse des Nameservers, von dem die Antwort bezogen wurde

Gemäß einer Ausführungsform ist der Observation Point im Sinne des RFC 5101 das Netzwerkkommunikationsgerät 300, 400 selbst.

Gemäß einer Ausführungsform können Datensätze zum Export bereitgestellt werden, die entweder neu in einen optionalen Zwischenspeicher des DNS Resolvers 407 aufgenommen wurden, oder die während ihrer Lebensdauer aktualisiert wurden.

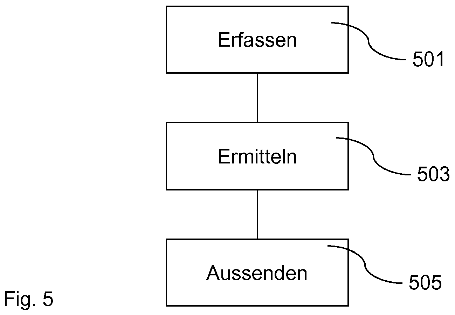

Fig. 5 zeigt ein Ablaufdiagramm eines Verfahrens zur Kommunikation über ein Kommunikationsnetzwerk mit Erfassen 501 eines aktuellen Wertes eines Kommunikationsparameters der Kommunikation über das Kommunikationsnetzwerk, Ermitteln 503 einer Abweichung des aktuellen Wertes des Kommunikationsparameters von einem Mittelwert des Kommunikationsparameters, und Aussenden 505 des aktuellen Wertes des Kommunikationsparameters über das Kommunikationsnetzwerk beispielsweise an eine vorbestimmte Kommunikationsadresse bei einer Abweichung des aktuellen Wertes des Kommunikationsparameters von dem Mittelwert des Kommunikationsparameters.

Das in Fig. 5 dargestellte Verfahren kann beispielsweise mittels des in Fig. 3 und/oder in Fig. 4 dargestellten Netzwerkkommunikationsgerätes 300 ausgeführt werden.
Gemäß einer Ausführungsform kann ein Kunde der Anomalieerkennung und der Filterung z.B. durch Beauftragung oder Änderung der Konfiguration der Netzwerkkomponenten und/oder Anwendungsprogramme des Netzwerkommunikationsgerätes 300, 400 zustimmen. Die erste Stufe der Anomalieerkennung erfolgt beispielsweise dezentral und auf Kundenseite, um die rechen- und Speicherlast bewältigen zu können, sowie um Daten zu verdichten und zu anonymisieren und damit dem Grundsatz der Datensparsamkeit zu folgen. Die Umsetzung der Anomaliemeldung in einen Filter erfolgt beispielsweise zeitversetzt und nach Überprüfung durch einen sachverständigen Bearbeiter. Der Kunde, also der Benutzer des Netzwerkommunikationsgerätes 101, 300, 400, kann somit die Erkennung von Anomalien aktivieren oder deaktivieren. Hierbei kann der Benutzer des Netzwerkommunikationsgerätes 300, 400 die Filterung IP-basierter Datenkommunikation zu mutmaßlichen Befehls- und Steuerungsservern eines Botnetzes aktivieren oder deaktivieren. Die Einstellungen gelten gemäß einer Ausführungsform für alle Geräte im Netz des Kunden, die über das Netzwerkommunikationsgeräte 300, 400 vermittelt mit einem Endpunkt außerhalb des Kundennetzes kommunizieren.

## Patentansprüche

1. Netzwerkkommunikationsgerät zur Kommunikation über ein Kommunikationsnetzwerk, mit:
einem Prozessor (301), welcher ausgebildet ist, einen aktuellen Wert eines Kommunikationsparameters der Kommunikation über das Kommunikationsnetzwerk zu erfassen, und eine Abweichung des aktuellen Wertes des Kommunikationsparameters von einem Mittelwert des Kommunikationsparameters zu ermitteln; und
einer Netzwerkschnittstelle (303), welche ausgebildet ist, den aktuellen Wert des Kommunikationsparameters über das Kommunikationsnetzwerk bei einer Abweichung des aktuellen Wertes des Kommunikationsparameters von dem Mittelwert des Kommunikationsparameters an eine Netzwerkentität zum Bewerten des Kommunikationsparameters und Detektieren eines unerwarteten Kommunikationsverhaltens des Netzwerkkommunikationsgeräts auszusenden, wobei der Prozessor (301) ausgebildet ist, die Netzwerkschnittstelle zum Aussenden des aktuellen Wertes des Kommunikationsparameters nur dann anzuweisen, wenn die Abweichung einen vorbestimmten Schwellwert erreicht,
wobei der Kommunikationsparameter zumindest einer der folgenden Kommunikationsparameter ist: durch ein Kundengerät empfangenes Datenvolumen, durch das Kundengerät ausgesendetes Datenvolumen, Verhältnis von einem durch das Kundengerät empfangenen Datenvolumen zu einem durch das Kundengerät ausgesendetem Datenvolumen, Datendurchsatz, Sendedatenrate, Empfangsdatenrate, Verhältnis von Sendedatenrate zu Empfangsdatenrate, Anzahl der Sendepakete, Anzahl der Empfangspakete, Größe eines Sendepakets, Größe eines Empfangspakets, Anfangszeit und Endzeit eines Informationsflusses.

2. Netzwerkkommunikationsgerät nach Anspruch 1, wobei der Prozessor (301) ausgebildet ist, den vorbestimmten Schwellwert in Abhängigkeit von dem Mittelwert des Kommunikationsparameters zu bestimmen.

3. Netzwerkkommunikationsgerät nach einem der vorstehenden Ansprüche, wobei die Netzwerkschnittstelle (303) ausgebildet ist, den Kommunikationsparameter mittels eines der folgenden Kommunikationsprotokolle auszusenden: Internet Protocol, Internet Protocol Flow Information Export Protocol, User Datagram Protocol, Transmission Control Protocol.

4. Netzwerkkommunikationsgerät nach einem der vorstehenden Ansprüche, wobei der Prozessor (301) ausgebildet ist, den aktuellen Wert des Kommunikationsparameters innerhalb eines vorbestimmten Beobachtungszeitintervalls zu erfassen.

5. Netzwerkkommunikationsgerät nach einem der vorstehenden Ansprüche, wobei der Prozessor (301) ausgebildet ist, den Mittelwert des Kommunikationsparameters durch eine Mittelung über Werte des Kommunikationsparameters oder durch die Bestimmung einer mittleren Häufigkeit eines Wertes eines Kommunikationsparameters, oder die Bestimmung einer mittleren Varianz der Werte des Kommunikationsparameters zu bestimmen.

6. Netzwerkkommunikationsgerät nach einem der vorstehenden Ansprüche, wobei der Mittelwert des Kommunikationsparameters zumindest einer der folgenden Mittelwerte ist: durch das Kundengerät empfangenes mittleres Datenvolumen, durch das Kundengerät ausgesendetes mittleres Datenvolumen, Verhältnis von einem durch das Kundengerät empfangenen mittleren Datenvolumen zu einem durch das Kundengerät ausgesendetem mittlerem Datenvolumen, mittlerer Datendurchsatz, mittlere Sendedatenrate, mittlere Empfangsdatenrate, mittleres Verhältnis von Sendedatenrate zu Empfangsdatenrate, mittlere Anzahl der Sendepakete, mittlere Anzahl der Empfangspakete, mittlere Größe eines Sendepakets, mittlere Größe eines Empfangspakets, mittlere Anfangszeit und Endzeit eines Informationsflusses.

7. Netzwerkkommunikationsgerät nach einem der vorstehenden Ansprüche, wobei die Netzwerkschnittstelle (303) ausgebildet ist, eine Filterbeschreibung über das Kommunikationsnetzwerk ansprechend auf das Aussenden des Kommunikationsparameters zu empfangen, und wobei der Prozessor (301) ausgebildet ist, gemäß der Filterbeschreibung eine Kommunikationsverbindung zu einer vorbestimmten Netzwerkadresse zu sperren.

8. Netzwerkkommunikationsgerät nach Anspruch 7, wobei der Prozessor (301) ausgebildet ist, eine einem Benutzer des Netzwerkkommunikationsgerätes anzeigbare Mitteilung über die Sperrung der Kommunikationsverbindung zu der vorbestimmten Netzwerkadresse zu erzeugen.

9. Netzwerkkommunikationsgerät nach einem der vorstehenden Ansprüche, wobei der Prozessor (301) ausgebildet ist, einen Domain Name System Resolver zu implementieren, wobei der Domain Name System Resolver eine Filterliste mit zumindest einem Filterkriterium umfasst.

10. Netzwerkkommunikationsgerät nach Anspruch 9, wobei der Domain Name System Resolver ausgebildet ist, ansprechend auf eine Anfrage, einem Alias-Namen eine dem Alias-Namen zugeordnete Netzwerkadresse auszugeben, statt der dem Alias-Namen zugeordneten Netzwerkadresse eine vorbestimmte Netzwerkadresse auszugeben, wenn der Alias-Name einem Filterkriterium der Filterliste entspricht.

11. Netzwerkkommunikationsgerät nach Anspruch 9 oder 10, wobei das Filterkriterium eine zumindest teilweise Übereinstimmung eines Alias-Namens mit einer Filterbeschreibung umfasst.

12. Netzwerkkommunikationsgerät nach einem der vorstehenden Ansprüche, das ein Netzwerk-Router ist.

13. Netzwerkkommunikationsgerät nach einem der vorstehenden Ansprüche, wobei der Prozessor (301) programmtechnisch eingerichtet ist, um den aktuellen Wert des Kommunikationsparameters sowie die Abweichung zu bestimmen.

14. Verfahren zur Kommunikation über ein Kommunikationsnetzwerk, mit:
Erfassen (501) eines aktuellen Wertes eines Kommunikationsparameters der Kommunikation über das Kommunikationsnetzwerk;
Ermitteln (503) einer Abweichung des aktuellen Wertes des Kommunikationsparameters von einem Mittelwert des Kommunikationsparameters; und
Aussenden (505) des aktuellen Wertes des Kommunikationsparameters über das Kommunikationsnetzwerk bei einer Abweichung des aktuellen Wertes des Kommunikationsparameters von dem Mittelwert des Kommunikationsparameters an eine Netzwerkentität zum Bewerten des Kommunikationsparameters und Detektieren eines unerwarteten Kommunikationsverhaltens, wenn die Abweichung einen vorbestimmten Schwellwert erreicht,
wobei der Kommunikationsparameter zumindest einer der folgenden Kommunikationsparameter ist: durch ein Kundengerät empfangenes Datenvolumen, durch das Kundengerät ausgesendetes Datenvolumen, Verhältnis von einem durch das Kundengerät empfangenen Datenvolumen zu einem durch das Kundengerät ausgesendetem Datenvolumen, Datendurchsatz, Sendedatenrate, Empfangsdatenrate, Verhältnis von Sendedatenrate zu Empfangsdatenrate, Anzahl der Sendepakete, Anzahl der Empfangspakete, Größe eines Sendepakets, Größe eines Empfangspakets, Anfangszeit und Endzeit eines Informationsflusses.

15. Netzwerksystem, das eine Netzwerkentität (103) umfasst, welche ausgebildet ist, zumindest einen aktuellen Wert eines Kommunikationsparameters von einem Netzwerkkommunikationsgerät gemäß einem der Ansprüche 1 bis 13 über ein Kommunikationsnetzwerk zu empfangen, und den aktuellen Wert des Kommunikationsparameters anhand eines messbaren Kriteriums zu bewerten, um festzustellen, ob der aktuelle Wert des Kommunikationsparameters auf ein unerwartetes Kommunikationsverhalten des Netzwerkkommunikationsgerät hinweist, wobei der Prozessor ferner ausgebildet ist, eine Warnmitteilung auszugeben, falls ein unerwartetes Kommunikationsverhalten des Netzwerkkommunikationsgeräts vorliegt, wobei das Netzwerksystem ferner das Netzwerkkommunikationsgerät (101) gemäß einem der Ansprüche 1 bis 13 und ein Sicherheitscenter (109) umfasst, wobei das Sicherheitscenter (109) ausgebildet ist, die Warnmitteilung von der Netzwerkentität (103) zu empfangen und ansprechend auf den Empfang der Warnmitteilung eine Filterbeschreibung zu dem Netzwerkkommunikationsgerät (101) auszusenden, und wobei das Netzwerkkommunikationsgerät (101) ausgebildet ist, gemäß der Filterbeschreibung eine Kommunikationsverbindung zu sperren.

16. Netzwerksystem gemäß Anspruch 15, wobei das messbare Kriterium zumindest eine der folgenden Angaben umfasst: Angabe über eine zeitliche Verteilung eines Auftretens des Wertes des Kommunikationsparameters, eine Angabe über eine Wahrscheinlichkeit eines Auftretens des Wertes des Kommunikationsparameters, eine Angabe über die Häufung der Werte des Kommunikationsparameters innerhalb eines Zeitintervalls.

17. Netzwerksystem gemäß einem der Ansprüche 15 oder 16, wobei die Netzwerkentität (103) ferner ausgebildet ist, eine Warnmitteilung über das Kommunikationsnetzwerk an ein Sicherheitscenter (109) auszusenden.

18. Netzwerksystem gemäß einem der Ansprüche 15 bis 17, das ferner einen Aggregationsserver (203) umfasst, welcher ausgebildet ist, eine Mehrzahl von gleichartigen Werten des Kommunikationsparameters zu aggregieren, und die Mehrzahl der aggregierten Kommunikationsparameter an die Netzwerkentität (103) auszusenden.

## Claims

1. A network communication device for communication over a communication network, comprising:
a processor (301) which is configured to detect a current value of a communication parameter of the communication over the communication network and to determine a deviation of the current value of the communication parameter from an average value of the communication parameter; and
a network interface (303) which is configured to transmit, in case the current value of the communication parameter deviates from the average value of the communication parameter, the current value of the communication parameter over the communication network to a network entity for assessing the communication parameter and detecting an unexpected communication behavior of the network communication device, wherein the processor (301) is configured to instruct the network interface only in case the deviation reaches a predetermined threshold value to transmit the current value of the communication parameter,
wherein the communication parameter is at least one of the following communication parameters: data volume received by a customer device, data volume sent by the customer device, ratio of a data volume received by a customer device and a data volume sent by a customer device, data throughput, transmission data rate, receiving data rate, ratio of transmission data rate and receiving data rate, number of transmission packets, number of receiving packets, size of a transmission packet, size of a receiving packet, start time and end time of an information flow.

2. The network communication device according to claim 1, wherein the processor (301) is configured to determine the predetermined threshold value depending on the average value of the communication parameter.

3. The network communication device according to any one of the preceding claims, wherein the network interface (303) is configured to transmit the communication parameter by means of one of the following communication protocols: Internet Protocol, Internet Protocol Flow Information Export Protocol, User Datagram Protocol, Transmission Control Protocol.

4. The network communication device according to any one of the preceding claims, wherein the processor (301) is configured to detect the current value of the communication parameter within a predetermined monitoring time interval.

5. The network communication device according to any one of the preceding claims, wherein the processor (301) is configured to determine the average value of the communication parameter by means of a notification about values of the communication parameter or by means of determining an average frequency of occurrence of a value of a communication parameter, or by means of determining an average variance of the values of the communication parameters.

6. The network communication device according to any one of the preceding claims, wherein the average value of the communication parameter is at least one of the following average values: average data volume received by the customer device, average data volume transmitted by the customer device, ratio of an average data volume received by the customer device and an average data volume transmitted by the customer device, average data throughput, average transmission data rate, average receiving data rate, average ratio of the transmission data rate and the receiving data rate, average number of transmission packets, average number of receiving packets, average size of a transmission packet, average size of a receiving packet, average starting time and end time of an information flow.

7. The network communication device according to any one of the preceding claims, wherein the network interface (303) is configured to receive a filter description over the communication network in response to transmitting the communication parameter, and wherein the processor (301) is configured to block a communication connection to a predetermined network address in accordance with the filter description.

8. The network communication device according to claim 7, wherein the processor (301) is configured to generate a message about the blocking of the communication connection to the predetermined network address, said message being displayable to a user of the network communication device.

9. The network communication device according to any one of the preceding claims, wherein the processor (301) is configured to implement a Domain Name System Resolver, wherein the Domain Name System Resolver comprises a filter list with at least one filter criterion.

10. The network communication device of claim 9, wherein the Domain Name System Resolver is configured to output, in response to a request to output to an alias name a network address assigned to the alias name, a predetermined network address instead of the network address assigned to the alias name, when the alias name corresponds to a filter criterion of the filter list.

11. The network communication device of claim 9 or 10, wherein the filter criterion comprises an at least partial matching of the alias name and a filter description.

12. The network communication device of any one of the preceding claims, which is a network router.

13. The network communication device of any one of the preceding claims, wherein the processor (301) is adapted in view of programming to determine the current value of the communication parameter as well as the deviation.

14. A method for communication over a communication network, comprising:
detecting (501) a current value of the communication parameter of the communication over the communication network;
determining (503) a deviation of the current value of the communication parameter from an average value of the communication parameter; and
in case the current value of the communication parameter deviates from the average value of the communication parameter, transmitting (505) the current value of the communication parameter over the communication network to a network entity for assessing the communication parameter and detecting an unexpected communication behavior of the network communication device in case the deviation reaches a predetermined threshold value,
wherein the communication parameter is at least one of the following communication parameters: data volume received by a customer device, data volume sent by the customer device, ratio of a data volume received by a customer device and a data volume sent by a customer device, data throughput, transmission data rate, receiving data rate, ratio of transmission data rate and receiving data rate, number of transmission packets, number of receiving packets, size of a transmission packet, size of a receiving packet, start time and end time of an information flow.

15. A network system comprising a network entity (103) which is configured to receive at least one current value of a communication parameter from a network communication device according to any one of claims 1 to 13 over a communication network and to assess the current value of the communication parameter based on a measurable criterion in order to determine whether the current value of the communication parameter indicates an unexpected communication behavior of the network communication device, wherein the processor is further configured to output a warning message in case of an unexpected communication behavior of the network communication device, wherein the network system further comprises the network communication device (101) according to any one of claims 1 to 13 and a security center (109), wherein the security center (109) is configured to receive the warning message from the network entity (103) and, in response to the receipt of the warning message, output a filter description to the network communication device (101), and wherein the network communication device (101) is configured to block a communication connection in accordance with the filter description.

16. The network system according to claim 15, wherein the measurable criterion comprises at least one of the following pieces of information: information about a temporal distribution of an occurrence of the value of the communication parameter, information about a probability of an occurrence of the value of the communication parameter, information about the frequency of occurrence of the values of the communication parameter within a time interval.

17. The network system according to claim 15 or 16, wherein the network entity (103) is further configured to transmit a warning message over the communication network to a security center (109).

18. The network system according to any one of claims 15 to 17, further comprising an aggregation server (203) which is configured to aggregate a plurality of similar values of the communication parameter and transmit the plurality of aggregated communication parameters to the network entity (103).

## Revendications

1. Appareil de communication en réseau, destiné à la communication via un réseau de communication, comprenant :
un processeur (301) prévu pour détecter une valeur actuelle d'un paramètre de la communication via le réseau de communication, et déterminer un écart de la valeur actuelle du paramètre de communication par rapport à une valeur moyenne du paramètre de communication ; et
une interface de réseau (303) prévue pour transmettre à une entité de réseau la valeur actuelle du paramètre de communication via le réseau de communication, en cas d'écart de la valeur actuelle du paramètre de communication par rapport à la valeur moyenne du paramètre de communication, pour évaluation du paramètre de communication et détection d'un comportement de communication inattendu de l'appareil de communication en réseau, le processeur (301) étant prévu pour ne commander la transmission par l'interface de réseau de la valeur actuelle du paramètre de communication que si l'écart atteint une valeur seuil prédéfinie,
où le paramètre de communication est au moins un des paramètres de communication suivants : volume de données reçu par un appareil client, volume de données transmis par l'appareil client, rapport entre un volume de données reçu par l'appareil client et un volume de données transmis par l'appareil client, débit de données, débit de données de transmission, débit de données de réception, rapport entre débit de données de transmission et débit de données de réception, nombre de paquets d'émission, nombre de paquets de réception, taille d'un paquet d'émission, taille d'un paquet de réception, temps de début et temps de fin d'un flux d'informations.

2. Appareil de communication en réseau selon la revendication 1, où le processeur (301) est prévu pour déterminer la valeur seuil prédéfinie en fonction de la valeur moyenne du paramètre de communication.

3. Appareil de communication en réseau selon l'une des revendications précédentes, où l'interface de réseau (303) est prévue pour transmettre le paramètre de communication au moyen d'un des protocoles de communication suivants : Internet Protocol, Internet Protocol Flow Information Export Protocol, User Datagram Protocol, Transmission Control Protocol.

4. Appareil de communication en réseau selon l'une des revendications précédentes, où le processeur (301) est prévu pour détecter la valeur actuelle du paramètre de communication pendant un intervalle temporel d'observation prédéfini.

5. Appareil de communication en réseau selon l'une des revendications précédentes, où le processeur (301) est prévu pour déterminer la valeur moyenne du paramètre de communication par une formation de moyenne des valeurs du paramètre de communication ou par détermination d'une fréquence moyenne d'une valeur d'un paramètre de communication, ou par détermination d'une variance moyenne des valeurs du paramètre de communication.

6. Appareil de communication en réseau selon l'une des revendications précédentes, où la valeur moyenne du paramètre de communication est au moins une des valeurs moyennes suivantes : volume de données moyen reçu par un appareil client, volume de données moyen transmis par l'appareil client, rapport entre un volume de données moyen reçu par l'appareil client et un volume de données moyen transmis par l'appareil client, débit de données moyen, débit de données de transmission moyen, débit de données de réception moyen, rapport moyen entre débit de données de transmission et débit de données de réception, nombre moyen de paquets d'émission, nombre moyen de paquets de réception, taille d'un de paquet d'émission, taille moyenne d'un paquet d'émission, taille moyenne d'un paquet de réception, temps de début et temps de fin moyens d'un flux d'informations.

7. Appareil de communication en réseau selon l'une des revendications précédentes, où l'interface de réseau (303) est prévue pour recevoir une description de filtre via le réseau de communication en réaction à la transmission du paramètre de communication, et où le processeur (301) est prévu pour bloquer une liaison de communication vers une adresse de réseau prédéfinie, conformément à la description de filtre.

8. Appareil de communication en réseau selon la revendication 7, où le processeur (301) est prévu pour générer un message affichable pour un utilisateur de l'appareil de communication en réseau, relatif au blocage de la liaison de communication vers l'adresse de réseau prédéfinie.

9. Appareil de communication en réseau selon l'une des revendications précédentes, où le processeur (301) est prévu pour implémenter un système de résolution de noms de domaine, ledit système de résolution de noms de domaine comprenant une liste de filtres avec au moins un critère de filtre.

10. Appareil de communication en réseau selon la revendication 9, où le système de résolution de noms de domaine est prévu pour fournir à un pseudonyme une adresse de réseau affectée au pseudonyme, en réaction à une demande, au lieu de fournir une adresse de réseau prédéfinie à l'adresse de réseau affectée au pseudonyme, si le pseudonyme correspond à un critère de filtre de la liste de filtres.

11. Appareil de communication en réseau selon la revendication 9 ou la revendication 10, où le critère de filtre comprend une concordance au moins partielle d'un pseudonyme avec une description de filtre

12. Appareil de communication en réseau selon l'une des revendications précédentes, lequel est un routeur de réseau.

13. Appareil de communication en réseau selon l'une des revendications précédentes, où le processeur (301) est prévu pour déterminer au moyen de sa technique de programmation la valeur actuelle du paramètre de communication ainsi que l'écart.

14. Procédé de communication via un réseau de communication, comprenant :
la détection (501) d'une valeur actuelle d'un paramètre de la communication via le réseau de communication ;
la détermination (503) d'un écart de la valeur actuelle du paramètre de communication par rapport à une valeur moyenne du paramètre de communication ; et
la transmission (505) à une entité de réseau de la valeur actuelle du paramètre de communication via le réseau de communication en cas d'écart de la valeur actuelle du paramètre de communication par rapport à la valeur moyenne du paramètre de communication, pour évaluation du paramètre de communication et détection d'un comportement de communication inattendu, si l'écart atteint une valeur seuil prédéfinie,
le paramètre de communication étant au moins un des paramètres de communication suivants : volume de données reçu par un appareil client, volume de données transmis par l'appareil client, rapport entre un volume de données reçu par l'appareil client et un volume de données transmis par l'appareil client, débit de données, débit de données de transmission, débit de données de réception, rapport entre débit de données de transmission et débit de données de réception, nombre de paquets d'émission, nombre de paquets de réception, taille d'un paquet d'émission, taille d'un paquet de réception, temps de début et temps de fin d'un flux d'informations.

15. Système de réseau, comprenant une entité de réseau (103) prévue pour recevoir au moins une valeur actuelle d'un paramètre de communication d'un appareil de communication en réseau selon l'une des revendications 1 à 13 via un réseau de communication, et pour évaluer la valeur actuelle du paramètre de communication sur la base d'un critère mesurable, afin de constater si la valeur actuelle du paramètre de communication renvoie à un comportement de communication inattendu de l'appareil de communication en réseau, le processeur étant en outre prévu pour émettre un message d'alerte si un comportement de communication inattendu de l'appareil de communication en réseau est présenté, le système de réseau comprenant en outre l'appareil de communication en réseau (101) selon l'une des revendications 1 à 13 et un centre de sécurité (109), ledit centre de sécurité (109) étant prévu pour recevoir le message d'alerte de l'entité de réseau (103) et transmettre une description de filtre à l'appareil de communication en réseau (101) en réaction à la réception du message d'alerte, et l'appareil de communication en réseau (101) étant prévu pour bloquer une liaison de communication conformément à la description de filtre.

16. Système de réseau selon la revendication 15, où le critère mesurable comprend au moins une des indications suivantes : indication d'une répartition temporelle d'une occurrence de la valeur du paramètre de communication, indication de la probabilité d'une occurrence de la valeur du paramètre de communication, indication de cumul des valeurs du paramètre de communication à l'intérieur d'un intervalle temporel.

17. Système de réseau selon la revendication 15 ou la revendication 16, où l'entité de réseau (103) est en outre prévue pour transmettre un message d'alerte à un centre de sécurité (109) via le réseau de communication.

18. Système de réseau selon l'une des revendications 15 à 17, comprenant en outre un serveur d'agrégation (203) prévu pour agréger une pluralité de valeurs équivalentes du paramètre de communication, et pour transmettre la pluralité des paramètres de communication agrégés à l'entité de réseau (103).
